# EUROPEAN PATENT APPLICATION

(11) **EP 1 672 578 A1**
(43) Date of publication of application: **21.06.2006**
(21) Application number: 05257831.7
(22) Date of filing: 19.12.2005
(51) Int. Cl.: G06Q 10/00

(54) **Method and system for analyzing the risk of a project**

(30) Priority: 17.12.2004 US 15307
(71) Applicant: RAYTHEON COMPANY, Waltham, MA 02451-1449 (US)
(72) Inventor: Angermeier, Thomas C., McKinney, Texas 75070 (US)
(74) Representative: Lawrence, John

(57) **Abstract**

Analyzing risk includes receiving input parameters describing a project. Schedule values for a schedule variable are established. The following are repeated for each schedule value to calculate cost-probability relationships relating a cost value of a cost variable with a probability value of a probability variable: a schedule value is selected, and a cost-probability relationship at the selected schedule value is calculated. A cost-probability-schedule relationship relating a cost value, a probability value, and a schedule value is determined from the calculated cost-probability relationships.

## Description

### TECHNICAL FIELD

This invention relates generally to the field of risk analysis and more specifically to a method and system for analyzing the risk of a project.

### BACKGROUND

The risk of a project may be analyzed to determine whether and how to undertake the project. Known techniques for analyzing risk evaluate one or more factors associated with a project to analyze the risk. The known techniques, however, might not provide for relevant comparisons of the impact of one factor on another factor. Accordingly, the known techniques may not effectively analyze risk.

### SUMMARY OF THE DISCLOSURE

In accordance with the present invention, disadvantages and problems associated with previous techniques for analyzing risk may be reduced or eliminated.

According to one embodiment of the present invention, analyzing risk includes receiving input parameters describing a project. Schedule values for a schedule variable are established. Using historical data applicable to the input parameters, the following are repeated for each schedule value to calculate cost-probability relationships relating a cost value of a cost variable with a probability value of a probability variable: a schedule value is selected, and a cost-probability relationship at the selected schedule value is calculated. A cost-probability-schedule relationship relating a cost value, a probability value, and a schedule value is determined from the calculated cost-probability relationships.

Certain embodiments of the invention may provide one or more technical advantages. A technical advantage of one embodiment may be that a cost-probability-schedule relationship relating a cost value, a probability value, and a schedule value may be determined. Another technical advantage of one embodiment may be that the cost-probability-schedule relationship may be used to estimate the effect of the cost and schedule of a project on the probability of meeting the cost.

Certain embodiments of the invention may include none, some, or all of the above technical advantages. One or more other technical advantages may be readily apparent to one skilled in the art from the figures, descriptions, and claims included herein.

It will be appreciated that such a project may include a manufacturing project to manufacture an article. Analyzing the risk associated with the manufacturing project may encompass analyzing whether it is worthwhile undertaking the manufacturing project. Such analysis can provide valuable information relating to the project, for example determining an optimum quantity of raw material for the article, controlling the costs associated with labour or machine time to manufacture the article, or determining an optimum sequence of steps in the manufacturing project to manufacture the article. This analysis can be used to change the order of steps in the manufacturing project to minimise the overall risk associated with the manufacturing project. Indeed , the method may comprise a method of manufacture of a product, where the nature of process steps used may be chosen/determined by a risk analysis , and/or the timing of process steps and/or the order of process steps. For example if there were two , or more , possible ways in which a certain component could be made on a production facility or bought in ready made , a risk analysis may help determine what manufacturing process to use - often the safest . If there is a mission-critical step in a manufacturing process a more reliable process route may be used in preference to a cheaper route in some embodiments. Risk analysis as part of the process of making a product may be used to control the process that is used to make the product.

According to another embodiment of the present invention there is provided a machine for analysing risk including:
a data input terminal for inputting data to the machine,
a database operable to store the input data, and
a server coupled to the database and including one or more modules,
the one or more modules operable to:
   communicate with the database and to generate a plurality of schedule values from the input data,
   select a schedule value from the plurality of schedule values,
   calculate a cost-probability relationship at the selected schedule value, and
   determine a cost-probability-schedule relationship from the calculated cost-probability relationship wherein the cost-probability-schedule relationship relates a cost value, a probability value and a schedule value.

Optionally the machine is adapted to generate a graph from the cost-probability-schedule relationship, and optionally the machine is adapted to display the graph to a user.

Preferably the one or more modules include a risk analyser, a graph generator, a computer system, and a cost model calculator.

According to another embodiment of the present invention there is provided a method of manufacture using a machine including;
a data input terminal for inputting data to the machine,
a database operable to store the input data,
an alarm means for alerting a user, and
a server coupled to the database and including one or more modules,
the method including inputting data to the database via the data input terminal and operating the one or more modules to:
communicate with the database and to generate a plurality of schedule values from the input data,
select a schedule value from the plurality of schedule values,
calculate a cost-probability relationship at the selected schedule value, and
activate the alarm means based on a cost-probability-schedule relationship calculated from the cost-probability relationship wherein the cost-probability-schedule relationship relates a cost value, a probability value and a schedule value.

According to another embodiment of the present invention there is provided a method of manufacturing a product using a number of manufacturing process steps performed on a machine including;
a data input terminal for inputting data to the machine,
a database operable to store the input data,
an alarm means for alerting a user, and
a server coupled to the database and including one or more modules,
the method including inputting data to the database via the data input terminal, the data relating to the manufacturing process steps; and
operating the one or more modules to:
communicate with the database and to generate a plurality of schedule values from the input data, the schedule values relating to the manufacturing process,
select a schedule value from the plurality of schedule values,
modify the manufacturing process steps pursuant to calculating a cost-probability relationship at the selected schedule value, and
activate the alarm means based on a cost-probability-schedule relationship calculated from the cost-probability relationship wherein the cost-probability-schedule relationship relates a cost value, a probability value and a schedule value relating to the modified manufacturing process
steps.

### BRIEF DESCRIPTION OF THE DRAWINGS

For a more complete understanding of the present invention and its features and advantages, reference is now made to the following description, taken in conjunction with the accompanying drawings, in which:
**FIGURE 1** is a block diagram illustrating one embodiment of a system for analyzing risk;
**FIGURE 2** is a flowchart illustrating one embodiment of a method for analyzing risk; and
**FIGURE 3** is an example graph illustrating an example cost-schedule-probability relationship.

### DETAILED DESCRIPTION OF THE DRAWINGS

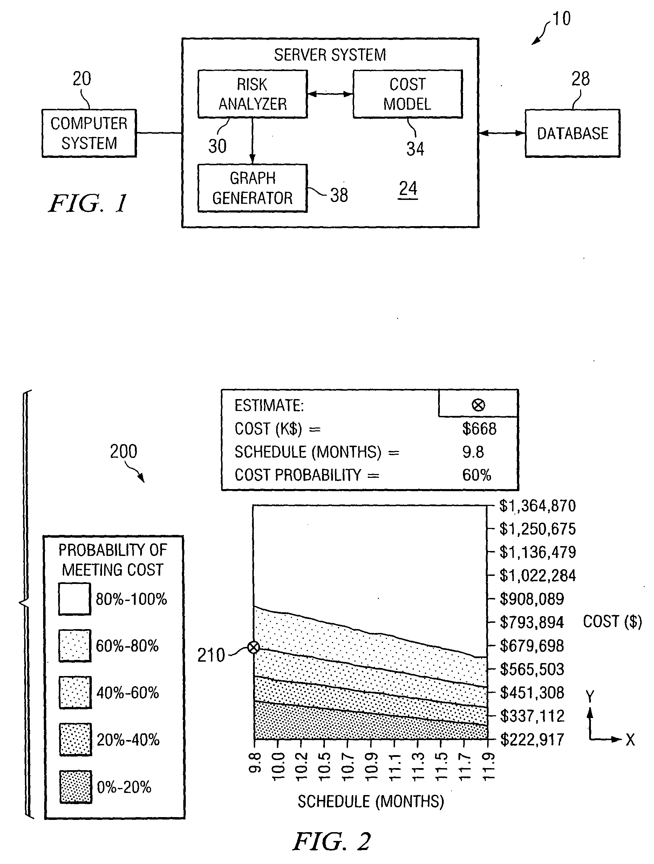

Embodiments of the present invention and its advantages are best understood by referring to FIGURES 1 through 3 of the drawings, like numerals being used for like and corresponding parts of the various drawings.

FIGURE 1 is a block diagram illustrating one embodiment of a system 10 that may be used to analyze the risk associated with a project. System 10 may be used to estimate the effect of the cost and schedule of a project on the probability of meeting the cost.

According to one embodiment, a project may refer to an undertaking that may be completed over a duration of time for a budget. The duration may refer to the period of time it takes to complete the undertaking, and may be measured in any suitable time units such as days, weeks, months, or years. A schedule variable may be used to represent the duration. A schedule value of the schedule variable for a particular project represents the duration of the project.

The budget may refer to the costs associated with completing the undertaking. The costs may include the costs of resources need to complete the project, for example, the costs of material, labor, overhead, other resource, or any combination of the preceding. A cost variable may be used to represent the budget. A cost value of the cost variable for a particular project represents the cost of completing the project.

Parameters may be used to describe projects. A parameter may refer to a measurable feature of a project. According to one embodiment, a parameter may refer to a feature that affects the duration, budget, or both duration and budget of a project. As an example, a project may involve designing a computer program. Parameters of the project may describe the size and complexity of the computer program. Typically, a larger and more complex program may increase the budget, duration, or both of the project.

According to the illustrated embodiment, system 10 includes a computer system 20, a server system 24, and a database 28 coupled as shown. According to one embodiment, computer system 20 allows a user to communicate with server system 24 to analyze risk. Computer system 20 may include any hardware, software, other logic, or combination of the preceding for communicating with server system 24, and may use any of a variety of computing structures, arrangements, or compilations to communicate with server system 24.

Server system 24 manages applications that analyze risk. Server system 24 may include any hardware, software, other logic, or combination of the preceding for managing the applications, and may use any of a variety of computing structures, arrangements, or compilations to manage the applications. According to the illustrated embodiment, server system 24 includes risk analyzer 30, cost model 34, and graph generator 38.

Risk analyzer 30 receives input parameters describing a project as well as historical data from the database 28, and determines a cost-schedule-probability relationship for the project in accordance with the parameters. A cost-schedule-probability relationship may refer to a relationship relating a cost value and a schedule value with a probability value describing the probability of meeting the cost value. As an example, a cost-schedule-probability relationship may describe the impact of the cost value and schedule on the probability of meeting the cost.

According to one embodiment, risk analyzer 30 may determine a range of potential schedule values for a particular project. Then, risk analyzer 30 may use cost model 34 to obtain cost-probability relationships for the schedule values. A cost-probability relationship may refer to a relationship relating a cost value with a probability value. Finally, risk analyzer 30 may generate the cost-schedule-probability relationship from the cost-probability relationships.

The schedule values may be calculated in any suitable manner. According to one embodiment, the schedule values may be calculated in accordance with maximum and minimum values, such as maximum and minimum schedule, cost, or probability values. According to a first example technique, maximum and minimum schedule values may be provided with the input. The duration between the maximum and minimum schedule values may be segmented into any suitable number of increments. For example, the difference between the maximum and minimum schedule values may be a three-month period, which may be segmented into weekly increments.

According to a second example technique, maximum and minimum schedule values may be determined in accordance with input maximum and minimum cost values by, for example, cost model 34. The schedule values may then be determined from the maximum and minimum schedule values in accordance with the first example technique. According to a third example technique, maximum and minimum schedule values may be determined in accordance with input maximum and probability values by, for example, cost model 34. Schedule values may be determined from the maximum and minimum schedule values according to the first example technique.

Cost model 34 may comprise an industry standard cost model, which includes historical database derived information. Cost model 34 receives parameters describing a project, and determines a cost-probability relationship for the project. The cost-probability relationship may be determined for a given schedule value supplied as a parameter. For example, the relationship may relate a cost value and a probability value for a given schedule value.

Cost model 34 may generate the cost-probability relationship in accordance with historical data. The historical data may comprise data drawn from past projects with specific costs and duration. For projects with specific parameters, the percentage of projects for which a specific cost was met may be determined. This percentage may be used to determine the probability of meeting the cost for other projects with the same or similar parameters.

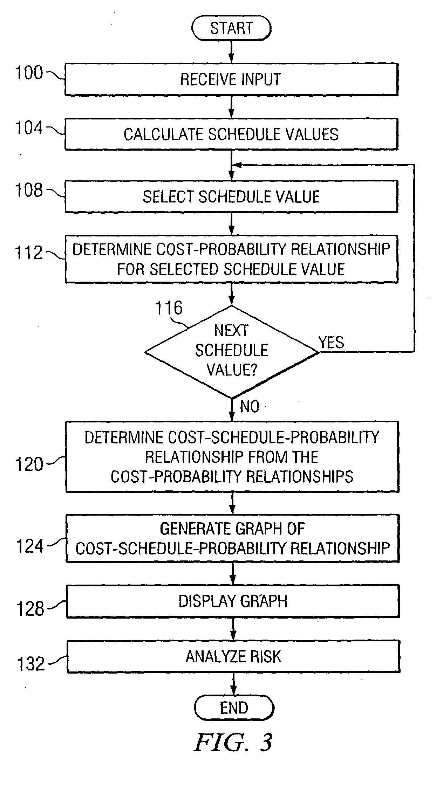

Graph generator 38 generates a graph of the cost-probability-schedule relationship. To generate the graph, graph generator 38 may calculate graph values representing the cost-probability-schedule relationship. A graph value may be used to represent a cost value related to a probability value related to a schedule value. An example of graph is described with reference to FIGURE 3.

Database 28 stores and facilitates retrieval of historical information used by server system 24. Database 28 may include any hardware, software, firmware, or combination of the preceding for storing and facilitating retrieval of information. Also, database 28 may use any of a variety of data structures, arrangements, or compilations to store and facilitate retrieval of information.

Computer system 20, server system 24, and database 28 may operate on one or more computers and may include appropriate input devices, output devices, mass storage media, processors, memory, or other components for receiving, processing, storing, and communicating information according to the operation of system 10. For example, the functions of computer system 20, server system 24, database 28, or any combination of the preceding may be provided using a single computer system, for example, a personal computer. As used in this document, the term "computer" refers to any suitable device operable to execute instructions and manipulate data to perform operations, for example, a personal computer, work station, network computer, wireless telephone, personal digital assistant, one or more microprocessors within these or other devices, or any other suitable processing device.

Computer system 20, server system 24, and database 28 may be integrated or separated according to particular needs. If any of computer system 20, server system 24, and database 28 are separated, the separated components may be coupled to each other using a local area network (LAN), a metropolitan area network (MAN), a wide area network (WAN), a global computer network such as the Internet, or any other appropriate wire line, wireless, or other link.

Modifications, additions, or omissions may be made to system 10 without departing from the scope of the invention. Moreover, the operations of system 10 may be performed by more, fewer, or other modules. For example, the operations of risk analyzer 30 and cost model 34 may be performed by one module, or the operations of risk analyzer 30 may be performed by more than one module. Additionally, operations of system 10 may be performed using any suitable logic comprising software, hardware, other logic, or any suitable combination of the preceding. As used in this document, "each" refers to each member of a set or each member of a subset of a set.

FIGURE 2 is a flowchart illustrating one embodiment of a method for analyzing risk. The method begins at step 100, where risk analyzer 30 of system 10 receives input. The input may include parameters describing a project. The input may also include maximum and minimum values, such as maximum and minimum cost, schedule, or probability values. For purposes of illustration, the input includes maximum and minimum cost values of $1,400,000 and $200,000, respectively.

The schedule values are calculated at step 104. The schedule values may be calculated according to any suitable manner, such as in accordance with the maximum and minimum values. For purposes of illustration, the schedule values are calculated according to the maximum and minimum cost values of $1,400,000 and $200,000, respectively. Cost model 34 may calculate that, given the maximum and minimum cost values, the maximum and minimum schedule values are approximately 11.9 months and 9.8 months, respectively. The difference between the maximum and minimum schedule values may be divided into increments of approximately 0.2 months to yield the schedule values.

A schedule value is selected at step 108. A cost-probability relationship is determined for the selected schedule value at step 112. Cost model 34 may determine a probability of meeting a cost value, given a schedule value, in order to determine the cost-probability relationship. If there is a next schedule value at step 116, the method returns to step 108 to select the next schedule value. If there is a no next schedule value at step 116, the method proceeds to step 120.

A cost-schedule-probability relationship is determined from the cost-probability relationships at step 120. Risk analyzer 30 determines the probability of meeting a cost value for each schedule value from the cost-probability relationships. From this information, risk analyzer 30 calculates the probability of meeting a cost value and a schedule value to generate the cost-schedule-probability relationship.

A graph of the cost-schedule-probability relationship is generated at step 124. Graph generator 38 may calculate graph values representing the relationship in order to generate the graph. The graph is displayed at step 128. Computer system 20 may display the graph. An example graph is described in more detail with reference to

### FIGURE 3.

FIGURE 3 is an example graph 200 that illustrates an example cost-schedule-probability schedule relationship. Given a specific cost value and schedule value, the probability of meeting the cost may be determined from the graph. A graph may represent the cost values, probability values, and schedule values of a cost-probability-schedule relationship in any suitable manner. The graph may have any suitable number of dimensions, and the variables may be represented by any suitable dimension of the graph.

According to the illustrated embodiment, the x-axis of graph 200 represents the schedule variable, and the y-axis represents the cost variable. The probability variable is represented by the shaded areas of the graph. A point of graph 200 describes the probability of meeting a cost given a cost value and a schedule value. As an example, estimate 210 represents that the probability of meeting the cost given a cost value of $668,000 and a schedule value of 9.8 months is 60 percent.

The example graph 200 illustrates several trends. If the schedule value decreases and the probability value is constant, the cost value increases. If the schedule value increases and the probability value is constant, the cost value decreases. If the schedule value decreases and the cost value is constant, the probability value decreases. If the schedule value increases and the cost value is constant, the probability value increases.

Referring back to FIGURE 2, the risk is analyzed using the cost-schedule-probability graph at step 132. Given a specific cost value and schedule value, the probability of meeting the cost may be determined from the graph. For example, at a given schedule value of 9.8 months and a given cost value of $668,000, the probability of meeting the cost is 60%. The probability may be used to assess the risk of engaging in a project with the given cost and schedule values.

According to one embodiment, the probability of overrun may refer to the difference between 100% and the probability of meeting the cost. For example, if the probability of meeting the cost is 60%, the probability of exceeding the cost is 40%. The amount of overrun may refer to the difference between the cost value at which the probability of meeting the cost is approximately 100% and the given cost value. For example, the cost value at which the probability is approximately 100% is $1,364,870, and the given cost is $668,434. Thus, the amount of overrun is $696,436. The cost risk is the amount of overrun multiplied by the probability of overrun. For example, the cost risk is $696,436 x 40% = $278,574. After analyzing the risk, the method terminates.

Modifications, additions, or omissions may be made to the method without departing from the scope of the invention. The method may include more, fewer, or other steps. Additionally, steps may be performed in any suitable order without departing from the scope of the invention.

Certain embodiments of the invention may provide one or more technical advantages. A technical advantage of one embodiment may be that a cost-probability-schedule relationship relating a cost value, a probability value, and a schedule value may be determined. Another technical advantage of one embodiment may be that the cost-probability-schedule relationship may be used to estimate the effect of the cost and schedule of a project on the probability of meeting the cost.

While this disclosure has been described in terms of certain embodiments and generally associated methods, alterations and permutations of the embodiments and methods will be apparent to those skilled in the art. Accordingly, the above description of example embodiments does not constrain this disclosure. Other changes, substitutions, and alterations are also possible without departing from the spirit and scope of this disclosure, as defined by the following claims.

## Claims

1. A method for analyzing risk, comprising:
receiving input comprising a plurality of parameters, the plurality of parameters describing a project associated with a duration and a budget;
establishing a plurality of schedule values for a schedule variable, the schedule variable representing the duration of the project;
repeating the following for each schedule value of the plurality of schedule values to calculate a plurality of cost-probability relationships, the cost-probability relationship relating a cost value of a cost variable with a probability value of a probability variable, the cost variable representing the budget of the project, the probability variable representing the probability of meeting a given cost value at a given schedule value:
selecting a schedule value of the plurality of schedule values; and
calculating a cost-probability relationship at the selected schedule value; and
determining a cost-probability-schedule relationship from the calculated cost-probability relationships, the cost-probability-schedule relationship relating a cost value, a probability value, and a schedule value.

2. The method of Claim 1, further comprising:
calculating a plurality of graph values representing the cost-probability-schedule relationship; and
generating a graph from the plurality of graph values.

3. The method of Claim 1, or Claim 2, wherein calculating the cost-probability relationship at the selected schedule value further comprises:
providing information to a cost model operable to estimate a cost value and a probability value at a given schedule value; and
receiving a result comprising the cost-probability relationship at the given schedule value.

4. The method of Claim 1, or any preceding claim, wherein establishing the plurality of schedule values for the schedule variable further comprises:
receiving a maximum cost value and a minimum cost value;
estimating a maximum schedule value and a minimum schedule value from the maximum cost value and the minimum cost value;
segmenting the difference between the maximum schedule value and the minimum schedule value into a plurality of increments; and
establishing the schedule values in accordance with the increments.

5. The method of Claim 1, or any preceding claim, wherein establishing the plurality of schedule values for the schedule variable further comprises:
receiving a maximum schedule value and a minimum schedule value;
segmenting the difference between the maximum schedule value and the minimum schedule value into a plurality of increments; and
establishing the schedule values in accordance with the increments.

6. The method of Claim 1, or any preceding claim, further comprising:
calculating a probability of overrun from the probability value, the probability of overrun representing the probability that the cost value will be exceeded;
calculating an amount of overrun from the cost value and a second cost value, the second cost value representing a cost associated with an approximately one hundred percent probability; and
determining a cost risk from the probability of overrun and the amount of overrun.

7. A system for analyzing risk, comprising:
a database operable to store input comprising a plurality of parameters, the plurality of parameters describing a project associated with a duration and a budget; and
a server system coupled to the database, the server system comprising one or more modules operable to:
establish a plurality of schedule values for a schedule variable, the schedule variable representing the duration of the project;
repeat the following for each schedule value of the plurality of schedule values to calculate a plurality of cost-probability relationships, the cost-probability relationship relating a cost value of a cost variable with a probability value of a probability variable, the cost variable representing the budget of the project, the probability variable representing the probability of meeting a given cost value at a given schedule value:
select a schedule value of the plurality of schedule values; and
calculate a cost-probability relationship at the selected schedule value; and
determine a cost-probability-schedule relationship from the calculated cost-probability relationships, the cost-probability-schedule relationship relating a cost value, a probability value, and a schedule value.

8. The system of Claim 7, the one or more modules further operable to:
calculate a plurality of graph values representing the cost-probability-schedule relationship; and
generate a graph from the plurality of graph values.

9. The system of Claim 7, or Claim 8, the one or more modules further operable to calculate the cost-probability relationship at the selected schedule value by:
providing information to a cost model operable to estimate a cost value and a probability value at a given schedule value; and
receiving a result comprising the cost-probability relationship at the given schedule value.

10. The system of Claim 7, or Claim 8, or Claim 9, the one or more modules further operable to establish the plurality of schedule values for the schedule variable by:
receiving a maximum cost value and a minimum cost value;
estimating a maximum schedule value and a minimum schedule value from the maximum cost value and the minimum cost value;
segmenting the difference between the maximum schedule value and the minimum schedule value into a plurality of increments; and
establishing the schedule values in accordance with the increments.

11. The system of Claim 7, or any of Claims 8 to 10, the one or more modules further operable to establish the plurality of schedule values for the schedule variable by:
receiving a maximum schedule value and a minimum schedule value;
segmenting the difference between the maximum schedule value and the minimum schedule value into a plurality of increments; and
establishing the schedule values in accordance with the increments.

12. The system of Claim 7, or any of Claims 9 to 11, the one or more modules further operable to:
calculate a probability of overrun from the probability value, the probability of overrun representing the probability that the cost value will be exceeded;
calculate an amount of overrun from the cost value and a second cost value, the second cost value representing a cost associated with an approximately one hundred percent probability; and
determine a cost risk from the probability of overrun and the amount of overrun.

13. Logic for analyzing risk, the logic embodied in a medium and operable to:
receive input comprising a plurality of parameters, the plurality of parameters describing a project associated with a duration and a budget;
establish a plurality of schedule values for a schedule variable, the schedule variable representing the duration of the project;
repeat the following for each schedule value of the plurality of schedule values to calculate a plurality of cost-probability relationships, the cost-probability relationship relating a cost value of a cost variable with a probability value of a probability variable, the cost variable representing the budget of the project, the probability variable representing the probability of meeting a given cost value at a given schedule value:
select a schedule value of the plurality of schedule values; and
calculate a cost-probability relationship at the selected schedule value; and
determine a cost-probability-schedule relationship from the calculated cost-probability relationships, the cost-probability-schedule relationship relating a cost value, a probability value, and a schedule value.

14. The logic of Claim 13, further operable to:
calculate a plurality of graph values representing the cost-probability-schedule relationship; and
generate a graph from the plurality of graph values.

15. The logic of Claim 13, or Claim 14, further operable to calculate the cost-probability relationship at the selected schedule value by:
providing information to a cost model operable to estimate a cost value and a probability value at a given schedule value; and
receiving a result comprising the cost-probability relationship at the given schedule value.

16. The logic of Claim 13, or Claim 14, or Claim 15, further operable to establish the plurality of schedule values for the schedule variable by:
receiving a maximum cost value and a minimum cost value;
estimating a maximum schedule value and a minimum schedule value from the maximum cost value and the minimum cost value;
segmenting the difference between the maximum schedule value and the minimum schedule value into a plurality of increments; and
establishing the schedule values in accordance with the increments.

17. The logic of Claim 13, or any of Claims 14 to 16, further operable to establish the plurality of schedule values for the schedule variable by:
receiving a maximum schedule value and a minimum schedule value;
segmenting the difference between the maximum schedule value and the minimum schedule value into a plurality of increments; and
establishing the schedule values in accordance with the increments.

18. The logic of Claim 13, or any of Claims 14 to 17, further operable to:
calculate a probability of overrun from the probability value, the probability of overrun representing the probability that the cost value will be exceeded;
calculate an amount of overrun from the cost value and a second cost value, the second cost value representing a cost associated with an approximately one hundred percent probability; and
determine a cost risk from the probability of overrun and the amount of overrun.

19. A system for analyzing risk, comprising:
means for receiving input comprising a plurality of parameters, the plurality of parameters describing a project associated with a duration and a budget;
means for establishing a plurality of schedule values for a schedule variable, the schedule variable representing the duration of the project;
means for repeating the following for each schedule value of the plurality of schedule values to calculate a plurality of cost-probability relationships, the cost-probability relationship relating a cost value of a cost variable with a probability value of a probability variable, the cost variable representing the budget of the project, the probability variable representing the probability of meeting a given cost value at a given schedule value:
selecting a schedule value of the plurality of schedule values; and
calculating a cost-probability relationship at the selected schedule value; and
means for determining a cost-probability-schedule relationship from the calculated cost-probability relationships, the cost-probability-schedule relationship relating a cost value, a probability value, and a schedule value.

20. A method for analyzing risk, comprising:
receiving input comprising a plurality of parameters, the plurality of parameters describing a project associated with a duration, a budget, and historical data;
establishing a plurality of schedule values for a schedule variable, the schedule variable representing the duration of the project, the plurality of schedule values established by performing at least one of the following:
a first procedure comprising:
receiving a maximum cost value and a minimum cost value;
estimating a maximum schedule value and a minimum schedule value from the maximum cost value and the minimum cost value;
segmenting the difference between the maximum schedule value and the minimum schedule value into a plurality of increments; and
establishing the schedule values in accordance with the increments; and
a second procedure comprising:
receiving a maximum schedule value and a minimum schedule value;
segmenting the difference between the maximum schedule value and the minimum schedule value into a plurality of increments; and
establishing the schedule values in accordance with the increments;
repeating the following for each schedule value of the plurality of schedule values to calculate a plurality of cost-probability relationships, the cost-probability relationship relating a cost value of a cost variable with a probability value of a probability variable, the cost variable representing the budget of the project, the probability variable representing the probability of meeting a given cost value at a given schedule value:
selecting a schedule value of the plurality of schedule values; and
calculating a cost-probability relationship at the selected schedule value by:
providing information to a cost model operable to estimate a cost value and a probability value at a given schedule value; and
receiving a result comprising the cost-probability relationship at the given schedule value;
determining a cost-probability-schedule relationship from the calculated cost-probability relationships, the cost-probability-schedule relationship relating a cost value, a probability value, and a schedule value;
calculating a plurality of graph values representing the cost-probability-schedule relationship;
generating a graph from the plurality of graph values;
calculating a probability of overrun from the probability value, the probability of overrun representing the probability that the cost value will be exceeded;
calculating an amount of overrun from the cost value and a second cost value, the second cost value representing a cost associated with an approximately one hundred percent probability; and
determine a cost risk from the probability of overrun and the amount of overrun.
